# EUROPEAN PATENT APPLICATION

(11) **EP 4 270 970 A1**
(43) Date of publication of application: **01.11.2023**
(21) Application number: 21922583.6
(22) Date of filing: 15.12.2021
(51) Int. Cl.: H04N 21/47

(54) **METHOD AND DEVICE FOR MULTIMEDIA DATA SHARING**

(30) Priority: 28.01.2021 CN 202110119871
(71) Applicant: Petal Cloud Technology Co., Ltd., Dongguan, Guangdong 523799 (CN)
(72) Inventor: WANG, Wei, Shenzhen, Guangdong 518129 (CN)
(74) Representative: Maiwald GmbH
(86) International application number: PCT/CN2021/138419
(87) International publication number: WO 2022/160993

(57) **Abstract**

This application is applicable to the technical field of terminals, and provides a multimedia data sharing method and apparatus. The method includes: generating, by using a multimedia play network element, a sharing request corresponding to multimedia data to be shared; sending the sharing request to a video server; receiving a multimedia recommendation list that is associated with the multimedia data to be shared and that is sent by the video server, and generating sharing information based on the multimedia recommendation list by using a social application; and sending, by using the social application, the sharing information to a sharee. In this way, the sharee may view each piece of multimedia data in a video recommendation list based on the sharing information. That is, the sharee can conveniently and quickly view associated multimedia data by using the social application, and diversity and flexibility of viewing the multimedia data by the sharee can be improved.

## Description

This application claims priority to Chinese Patent Application No. 202110119871.5, filed with the China National Intellectual Property Administration on January 28, 2021 and entitled "MULTIMEDIA DATA SHARING METHOD AND APPARATUS", which is incorporated herein by reference in its entirety.

### TECHNICAL FIELD

This application relates to the technical field of terminals, and in particular, to a multimedia data sharing method and apparatus.

### BACKGROUND

With continuous development of science and technologies, a sharer may view multimedia data on a terminal device, and share the currently viewed multimedia data with a sharee, so that the sharee can also view the multimedia data.

For example, the multimedia data is video data. A video application on the terminal device that plays the video data may invoke a sharing interface of a social application, and send, to the social application, information about the video data currently played in the video application. The social application may generate sharing information based on the information about the video data, and then send the sharing information to the sharee. Correspondingly, the sharee may view, on a terminal device, the shared video data based on the sharing information.

However, the sharee can only view the currently shared video data based on the sharing information.

### SUMMARY

This application provides a multimedia data sharing method and apparatus, to resolve a problem in a conventional technology that a sharee can only view currently shared multimedia data.

To achieve the foregoing objective, the following technical solutions are used in this application.

According to a first aspect, a multimedia data sharing method is provided. The method includes:
generating, by using a multimedia play network element, a sharing request corresponding to multimedia data to be shared;
sending the sharing request to a multimedia server;
receiving a multimedia recommendation list that is associated with the multimedia data to be shared and that is sent by the multimedia server, and generating sharing information based on the multimedia recommendation list by using a social application; and
sending, by using the social application, the sharing information to a sharee.

In a first possible implementation of the first aspect, the multimedia recommendation list includes multimedia information to be shared and a plurality of pieces of associated multimedia information, the multimedia information to be shared is multimedia information corresponding to the multimedia data to be shared, and the associated multimedia information is multimedia information associated with the multimedia information to be shared; and
the generating sharing information based on the multimedia recommendation list by using a social application includes:
generating a multimedia information selection list based on the multimedia information to be shared and each piece of the associated multimedia information; and
in response to a selection operation of a sharer in the multimedia information selection list, generating the sharing information based on multimedia information selected by the sharer.

Based on any foregoing possible implementation of the first aspect, in a second possible implementation of the first aspect, before the generating, by using a multimedia play network element, a sharing request corresponding to multimedia data to be shared, the method further includes:
in response to a sharing operation triggered by the sharer for the multimedia data to be shared, obtaining, by using the multimedia play network element, a multimedia identifier of the multimedia data to be shared, where the multimedia identifier is used to indicate the multimedia data to be shared; and
the generating, by using a multimedia play network element, a sharing request corresponding to multimedia data to be shared includes:
   generating the sharing request based on the multimedia identifier by using the multimedia play network element.

Based on the second possible implementation of the first aspect, in a third possible implementation of the first aspect, the sharing request includes sharer information and/or a sharing path, the sharer information includes a location of the sharer, a time point of sharing, and/or information about the multimedia play network element, the sharing path is used to indicate the social application that sends the sharing information, and the information about the multimedia play network element is used to indicate the multimedia play network element; and
if the multimedia data to be shared is video data, the sharing request further includes a timestamp, where the timestamp is used to indicate a play progress of the video data.

Based on any foregoing possible implementation of the first aspect, in a fourth possible implementation of the first aspect, the sending, by using the social application, the sharing information to a sharee includes:
displaying, to the sharer, a sharing interface generated based on the sharing information, where the sharing interface includes a sending option; and
in response to a selection operation triggered by the sharer on the sending option, sending, by using the social application, the sharing information to the sharee.

According to a second aspect, a multimedia data sharing method is provided. The method includes:
receiving a sharing request that is corresponding to multimedia data to be shared and that is sent by a terminal device;
generating, according to the sharing request, based on a plurality of pieces of pre-stored multimedia data, a multimedia recommendation list associated with the multimedia data to be shared; and
sending the multimedia recommendation list to the terminal device.

In a first possible implementation of the second aspect, the generating, according to the sharing request, based on a plurality of pieces of pre-stored multimedia data, a multimedia recommendation list associated with the multimedia data to be shared includes:
obtaining, from the plurality of pieces of multimedia data according to the sharing request, a plurality of pieces of multimedia data to be associated that is associated with the multimedia data to be shared;
selecting a preset quantity of pieces of multimedia data to be associated as associated multimedia data; and
generating the multimedia recommendation list based on multimedia information corresponding to the multimedia data to be shared and multimedia information corresponding to each piece of the associated multimedia data.

Based on the first possible implementation of the second aspect, in a second possible implementation of the second aspect, the sharing request includes a multimedia identifier, and the multimedia identifier is used to indicate the multimedia data to be shared; and
the obtaining, from the plurality of pieces of multimedia data according to the sharing request, a plurality of pieces of multimedia data to be associated that is associated with the multimedia data to be shared includes:
obtaining, based on the multimedia identifier, the multimedia information corresponding to the multimedia data to be shared; and
searching, in the plurality of pieces of multimedia data as the multimedia data to be associated, for a plurality of pieces of multimedia data that matches the multimedia information corresponding to the multimedia data to be shared.

Based on the first possible implementation of the second aspect, in a third possible implementation of the second aspect, the sharing request includes sharer information, the sharer information includes a location of a sharer, a time point of sharing, and/or information about a multimedia play network element, and the information about the multimedia play network element is used to indicate the multimedia play network element; and
the obtaining, from the plurality of pieces of multimedia data according to the sharing request, a plurality of pieces of multimedia data to be associated that is associated with the multimedia data to be shared includes at least one of the following:
selecting, based on a geographic location indicated by the location of the sharer, the multimedia data to be associated from multimedia data played by the multimedia play network element within a preset range;
selecting, based on the time point of sharing, the multimedia data to be associated from multimedia data played by the multimedia play network element within a preset time period; and
selecting, based on the multimedia play network element indicated by the information about the multimedia play network element, the multimedia data to be associated from multimedia data played by the multimedia play network element.

Based on the first possible implementation of the second aspect, in a fourth possible implementation of the second aspect, the sharing request includes a sharing path, and the sharing path is used to indicate a social application that generates sharing information based on the multimedia recommendation list; and
the selecting a preset quantity of pieces of multimedia data to be associated as associated multimedia data includes:
determining the social application indicated by the sharing path;
determining a user preference corresponding to the social application, where the user preference is used to indicate degrees of preferences of a user for different multimedia data; and
selecting, based on the user preference, a preset quantity of pieces of multimedia data to be associated from the plurality of pieces of multimedia data to be associated as the associated multimedia data.

Based on the fourth possible implementation of the second aspect, in a fifth possible implementation of the second aspect, the selecting, based on the user preference, a preset quantity of pieces of multimedia data to be associated from the plurality of pieces of multimedia data to be associated as the associated multimedia data includes:
performing calculation, based on the user preference, with reference to multimedia information corresponding to each piece of the multimedia data to be associated, to obtain a degree of association between each piece of the multimedia data to be associated and the multimedia data to be shared; and
selecting, based on the degree of association corresponding to each piece of the multimedia data to be associated, a preset quantity of pieces of multimedia data to be associated from the plurality of pieces of multimedia data to be associated as the associated multimedia data.

Based on any foregoing possible implementation of the second aspect, in a sixth possible implementation of the second aspect, the multimedia data to be shared is video data, the sharing request includes a timestamp, and the timestamp is used to indicate a play progress of the video data; and
the associated multimedia data includes a video clip after the timestamp in the video data.

Based on any foregoing possible implementation of the second aspect, in a seventh possible implementation of the second aspect, the plurality of pieces of multimedia data are pre-stored in a multimedia server, or pre-stored in a resource server connected to the multimedia server.

According to a third aspect, a multimedia data sharing apparatus is provided. The apparatus includes:
a request generation module, configured to generate, by using a multimedia play network element, a sharing request corresponding to multimedia data to be shared;
a sending module, configured to send the sharing request to a multimedia server;
a receiving module, configured to receive a multimedia recommendation list that is associated with the multimedia data to be shared and that is sent by the multimedia server; and
an information generation module, configured to generate sharing information based on the multimedia recommendation list by using a social application, where
the sending module is further configured to send, by using the social application, the sharing information to a sharee.

In a first possible implementation of the third aspect, the multimedia recommendation list includes multimedia information to be shared and a plurality of pieces of associated multimedia information, the multimedia information to be shared is multimedia information corresponding to the multimedia data to be shared, and the associated multimedia information is multimedia information associated with the multimedia information to be shared; and
the information generation module is further configured to: generate a multimedia information selection list based on the multimedia information to be shared and each piece of the associated multimedia information; and in response to a selection operation of a sharer in the multimedia information selection list, generate the sharing information based on multimedia information selected by the sharer.

Based on any foregoing possible implementation of the third aspect, in a second possible implementation of the third aspect, the apparatus further includes:
an obtaining module, configured to: in response to a sharing operation triggered by the sharer for the multimedia data to be shared, obtain, by using the multimedia play network element, a multimedia identifier of the multimedia data to be shared, where the multimedia identifier is used to indicate the multimedia data to be shared; and
the request generation module is further configured to generate the sharing request based on the multimedia identifier by using the multimedia play network element.

Based on the second possible implementation of the third aspect, in a third possible implementation of the third aspect, the sharing request includes sharer information and/or a sharing path, the sharer information includes a location of the sharer, a time point of sharing, and/or information about the multimedia play network element, the sharing path is used to indicate the social application that sends the sharing information, and the information about the multimedia play network element is used to indicate the multimedia play network element; and
if the multimedia data to be shared is video data, the sharing request further includes a timestamp, where the timestamp is used to indicate a play progress of the video data.

Based on any foregoing possible implementation of the third aspect, in a fourth possible implementation of the third aspect, the sending module is further configured to: display, to the sharer, a sharing interface generated based on the sharing information, where the sharing interface includes a sending option; and in response to a selection operation triggered by the sharer on the sending option, send, by using the social application, the sharing information to the sharee.

According to a fourth aspect, a multimedia data sharing apparatus is provided. The apparatus includes:
a receiving module, configured to receive a sharing request that is corresponding to multimedia data to be shared and that is sent by a terminal device;
a list generation module, configured to generate, according to the sharing request, based on a plurality of pieces of pre-stored multimedia data, a multimedia recommendation list associated with the multimedia data to be shared; and
a sending module, configured to send the multimedia recommendation list to the terminal device.

In a first possible implementation of the fourth aspect, the list generation module is further configured to: obtain, from the plurality of pieces of multimedia data according to the sharing request, a plurality of pieces of multimedia data to be associated that is associated with the multimedia data to be shared; select a preset quantity of pieces of multimedia data to be associated as associated multimedia data; and generate the multimedia recommendation list based on multimedia information corresponding to the multimedia data to be shared and multimedia information corresponding to each piece of the associated multimedia data.

Based on the first possible implementation of the fourth aspect, in a second possible implementation of the fourth aspect, the sharing request includes a multimedia identifier, and the multimedia identifier is used to indicate the multimedia data to be shared; and
the list generation module is further configured to: obtain, based on the multimedia identifier, the multimedia information corresponding to the multimedia data to be shared; and search, in the plurality of pieces of multimedia data as the multimedia data to be associated, for a plurality of pieces of multimedia data that matches the multimedia information corresponding to the multimedia data to be shared.

Based on the first possible implementation of the fourth aspect, in a third possible implementation of the fourth aspect, the sharing request includes sharer information. The sharer information includes a location of a sharer, a time point of sharing, and/or information about a multimedia play network element, and the information about the multimedia play network element is used to indicate the multimedia play network element; and
the list generation module is further configured to perform at least one of the following:
select, based on a geographic location indicated by the location of the sharer, the multimedia data to be associated from multimedia data played by the multimedia play network element within a preset range;
select, based on the time point of sharing, the multimedia data to be associated from multimedia data played by the multimedia play network element within a preset time period; and
select, based on the multimedia play network element indicated by the information about the multimedia play network element, the multimedia data to be associated from multimedia data played by the multimedia play network element.

Based on the first possible implementation of the fourth aspect, in a fourth possible implementation of the fourth aspect, the sharing request includes a sharing path, and the sharing path is used to indicate a social application that generates sharing information based on the multimedia recommendation list; and
the list generation module is further configured to: determine the social application indicated by the sharing path; determine a user preference corresponding to the social application, where the user preference is used to indicate degrees of preferences of a user for different multimedia data; and select, based on the user preference, a preset quantity of pieces of multimedia data to be associated from the plurality of pieces of multimedia data to be associated as the associated multimedia data.

Based on the fourth possible implementation of the fourth aspect, in a fifth possible implementation of the fourth aspect, the list generation module is further configured to: perform calculation, based on the user preference, with reference to multimedia information corresponding to each piece of the multimedia data to be associated, to obtain a degree of association between each piece of the multimedia data to be associated and the multimedia data to be shared; and select, based on the degree of association corresponding to each piece of the multimedia data to be associated, a preset quantity of pieces of multimedia data to be associated from the plurality of pieces of multimedia data to be associated as the associated multimedia data.

Based on any foregoing possible implementation of the fourth aspect, in a sixth possible implementation of the fourth aspect, the multimedia data to be shared is video data, the sharing request includes a timestamp, and the timestamp is used to indicate a play progress of the video data; and
the associated multimedia data includes a video clip after the timestamp in the video data.

Based on any foregoing possible implementation of the fourth aspect, in a seventh possible implementation of the fourth aspect, the plurality of pieces of multimedia data are pre-stored in a multimedia server, or pre-stored in a resource server connected to the multimedia server.

According to a fifth aspect, an electronic device is provided. The electronic device includes a processor. The processor is configured to run a computer program stored in a memory, to implement the multimedia data sharing method according to any one of the first aspect and the second aspect.

According to a sixth aspect, a computer-readable storage medium is provided. The computer-readable storage medium stores a computer program, and when the computer program is executed by a processor, the multimedia data sharing method according to any one of the first aspect and the second aspect is implemented.

According to a seventh aspect, a chip system is provided. The chip system includes a memory and a processor, and the processor executes a computer program stored in the memory, to implement the multimedia data sharing method according to any one of the first aspect and the second aspect.

The chip system may be a single chip or a chip module including a plurality of chips.

According to the multimedia data sharing method and apparatus provided in this application, an example in which the multimedia data is video data is used. The terminal device obtains and sends, to a video server, video information to be shared of video data to be shared. The video server may generate and feed back, to the terminal device, a video recommendation list based on the video information to be shared, with reference to each piece of video data in a resource server. The terminal device may send the video recommendation list to a social application by using a video play network element, and then generate and send, to the sharee, sharing information by using the social application, with reference to the video recommendation list. In this way, the sharee may view each piece of video data in the video recommendation list based on the sharing information. That is, the sharee can conveniently and quickly view associated video data by using the social application, and diversity and flexibility of viewing the video data by the sharee can be improved.

### BRIEF DESCRIPTION OF DRAWINGS

FIG. 1 is a schematic diagram of a sharing scenario related to a multimedia data sharing method according to an embodiment of this application;
FIG. 2 is a schematic diagram of a structure of a terminal device according to an embodiment of this application;
FIG. 3 is a schematic flowchart of a multimedia data sharing method according to an embodiment of this application;
FIG. 4 is a schematic diagram of a play interface according to an embodiment of this application;
FIG. 5 is a schematic diagram of a play interface including a pop-up window for sharing according to an embodiment of this application;
FIG. 6 is a schematic diagram of a candidate interface according to an embodiment of this application;
FIG. 7A and FIG. 7B are a schematic diagram of a user selection interface and a pop-up window for confirmation according to an embodiment of this application;
FIG. 8 is a block diagram of a structure of a multimedia data sharing apparatus according to an embodiment of this application;
FIG. 9 is a block diagram of a structure of another multimedia data sharing apparatus according to an embodiment of this application; and
FIG. 10 is a block diagram of a structure of still another multimedia data sharing apparatus according to an embodiment of this application.

### DESCRIPTION OF EMBODIMENTS

In the following descriptions, for illustration instead of limitation, specific details such as a particular system structure and a particular technology are provided for thorough understanding of embodiments of this application. However, a person skilled in the art should know that this application may also be implemented in other embodiments without these specific details. In other cases, detailed descriptions of well-known circuits and methods are omitted for avoiding unnecessary details that interfere with description of this application.

Terms used in the following embodiments are merely intended to describe specific embodiments, but are not intended to limit this application. Terms "a", "the", "the foregoing", and "this" of singular forms used in the description and the appended claims of this application are intended to further include expressions such as "one or more", unless otherwise specified contrarily in the context clearly.

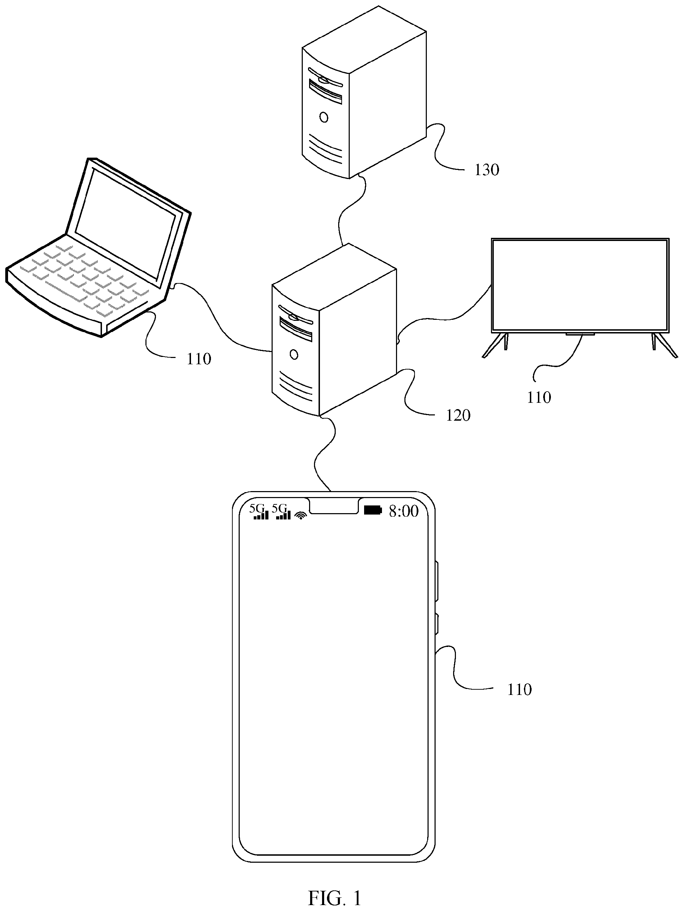

First, a sharing scenario related to a multimedia data sharing method according to an embodiment of this application is described. As shown in FIG. 1, the sharing scenario shown in FIG. 1 may include a terminal device 110, a multimedia server 120, and a resource server 130. The multimedia server 120 is separately connected to the terminal device 110 and the resource server 130. Correspondingly, the multimedia server 120 may obtain multimedia data from the resource server 130, and send the obtained multimedia data to the terminal device 110. The terminal device 110 may receive and play the multimedia data.

The multimedia data may include a plurality of types of data, for example, text, an image, an animation, a sound, and a video. In this embodiment of this application, an example in which the multimedia data is video data is used for description. Correspondingly, in the following descriptions, a video server refers to the multimedia server 120, the video data refers to the multimedia data, and other content related to the video data refers to content related to the multimedia data.

The terminal device 110 may include a video play network element, and the video play network element is configured to play the video data. The video play network element may be an application installed on the terminal device 110, or may be a web (web) application started by the running terminal device 110. This is not limited in this embodiment of this application.

The terminal device 110 may further include a plurality of types of social applications. When viewing, by using the video play network element, video data to be shared, a user may play the role of a sharer and share, by using a social application, the video data to be shared with a sharee. The plurality of types of social applications may include an instant messaging social application, a question and answer social application, a comprehensive social application, and the like. The social application is not limited in this embodiment of this application.

The video server may include a video sharing service network element, and the video sharing service network element is configured to implement a video sharing service. For example, the video sharing service network element may obtain, from the resource server 130 according to a sharing request that is for the video data to be shared and that is sent by the terminal device 110, associated video information corresponding to each piece of associated video data that matches the sharing request.

The resource server 130 may include a plurality of pieces of video data. Each piece of the video data may correspond to information, for example, a video identifier, a video type, a video label, and other information. The video identifier may be a unique identifier of the video data in the resource server 130. The video type may indicate a style of the video data. The video label may be a group of keywords obtained based on an overview of content and an attribute of the video data. The other information may include information about, for example, an actor or actress and a director related to the video data.

For example, the video identifier may be a character string, for example, BV1Xa4y1H7G8, that includes a digit and/or a letter. The video type may be comedy, romance, action, horror, science fiction, crime, thriller, suspense, fantasy, war, animation, biography, family, musical, history, adventure, nonfiction, disaster, or the like. For different types of video data, there are different corresponding video labels.

In addition, each piece of the video data may further correspond to a length type, and the length type of the video data is used to indicate a time length for playing the video data. For example, the length type of the video data may be a long video, a medium video, or a short video. The short video is less than 5 minutes in length for playing. The medium video is greater than or equal to 5 minutes and less than or equal to 30 minutes in length for playing. The long video is greater than 30 minutes in length for playing.

In a process in which the terminal device 110 plays, by using the video play network element, the video data to be shared, the terminal device 110 may detect a sharing operation triggered by a user, and control, according to the sharing operation triggered by the user, the video play network element to generate the sharing request for the video data to be shared. The sharing operation may be an operation of, for example, clicking, sliding, or long pressing. This is not limited in this embodiment of this application.

Then, the terminal device 110 may send the sharing request generated by using the video play network element to the video server. The video server may receive the sharing request, and perform search and analysis by using the video sharing service network element, with reference to the information, for example, the video identifier, the video type, the video label, and the length type that correspond to each piece of the video data in the resource server 130, to obtain a plurality of pieces of associated video information that match the sharing request and obtain the associated video data corresponding to each piece of the associated video information. In this way, a video recommendation list may be generated based on the plurality of pieces of associated video information and a plurality of pieces of associated video data. The associated video information may include information about the associated video data, for example, a name, descriptive information, and a uniform resource locator (uniform resource locator, URL) for playing. The descriptive information may include at least one of a main actor or actress, the video type, and the video label. Clearly, the descriptive information may further include other information, for example, the length type. This is not limited in this embodiment of this application.

The video server may feed back the video recommendation list to the terminal device 110. The terminal device 110 may receive and send, to the social application, the video recommendation list by invoking, by using the video play network element, an interface provided by the social application on a social platform. The social application may generate sharing information based on the video recommendation list, and send the sharing information to the sharee, so that the sharee can view the video data to be shared and the plurality of pieces of associated video data through the sharing information.

It should be noted that, in actual application, the terminal device 110 may be a mobile phone, a large-screen device, a computer, a tablet computer, or another device that can play multimedia data. This is not limited in this embodiment of this application. In addition, the video server and the resource server 130 may be separately located in different hardware devices, or may be integrated into a same hardware device. This is not limited in this embodiment of this application.

In addition, the associated video data may include a long video, may include a short video, or may include a video clip obtained based on a timestamp. This is not limited in this embodiment of this application. For example, a length of the video data to be shared is 60 minutes, and a play progress indicated by a timestamp is 40 minutes. In this case, a video clip obtained based on the timestamp may be a video clip, in the video data to be shared, corresponding to 40 minutes to 60 minutes.

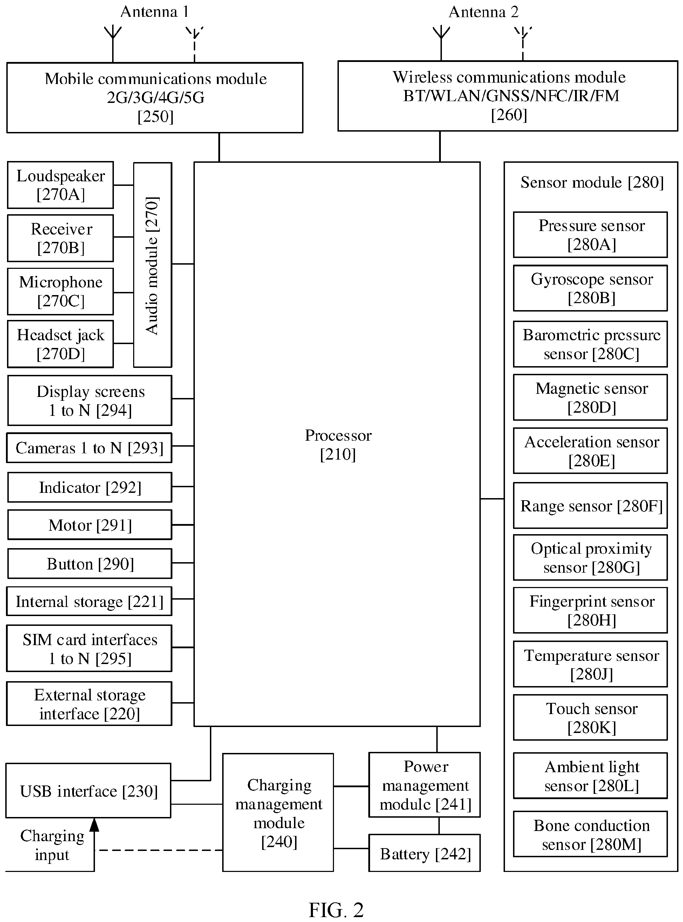

An example in which the terminal device is a mobile phone is used below to describe the terminal device. Refer to FIG. 2. FIG. 2 is a schematic diagram of a structure of a terminal device according to an embodiment of this application.

The terminal device may include a processor 210, an external storage interface 220, an internal storage 221, a universal serial bus (universal serial bus, USB) interface 230, a charging management module 240, a power management module 241, a battery 242, an antenna 1, an antenna 2, a mobile communications module 250, a wireless communications module 260, an audio module 270, a loudspeaker 270A, a receiver 270B, a microphone 270C, a headset jack 270D, a sensor module 280, a button 290, a motor 291, an indicator 292, a camera 293, a display screen 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a range sensor 280F, an optical proximity sensor 280G, a fingerprint sensor 280H, a temperature sensor 280J, a touch sensor 280K, an ambient light sensor 280L, a bone conduction sensor 280M, and the like.

It can be understood that the structure shown in this embodiment of the present invention does not constitute a specific limitation on the terminal device. In some other embodiments of this application, the terminal device may include more or fewer components than those shown in the figure, or some components may be combined, or some components may be split, or different component arrangements may be used. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the terminal device. The controller may generate an operation control signal based on an instruction operation code and a time sequence signal, to complete control of instruction reading and instruction execution.

A memory may be further disposed in the processor 210, and is configured to store an instruction and data. In some embodiments, the memory in the processor 210 is a cache memory. The memory may store an instruction or data that has just been used or is cyclically used by the processor 210. If the processor 210 needs to use the instruction or the data again, the processor may directly invoke the instruction or the data from the memory. This avoids repeated access, reduces a time for waiting of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 210 may include a plurality of groups of I2C buses. The processor 210 may be separately coupled to the touch sensor 280K, a charger, a flashlight, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the terminal device.

The I2S interface may be used for audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may transmit an audio signal to the wireless communications module 260 through the I2S interface, to implement a function of answering a call by using a Bluetooth headset.

The PCM interface may also be used for audio communication, with analog signal sampling, quantization, and coding. In some embodiments, the audio module 270 may be coupled to the wireless communications module 260 through a PCM bus interface. In some embodiments, the audio module 270 may alternatively transmit an audio signal to the wireless communications module 260 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communications bus. The bus converts between serial communication and parallel communication for data to be transmitted. In some embodiments, the UART interface is usually used to connect the processor 210 to the wireless communications module 260. For example, the processor 210 communicates with a Bluetooth module in the wireless communications module 260 through the UART interface, to implement a Bluetooth function. In some embodiments, the audio module 270 may transmit an audio signal to the wireless communications module 260 through the UART interface, to implement a function of playing music by using a Bluetooth headset.

The MIPI interface may be used to connect the processor 210 to a peripheral component, for example, the display screen 294 or the camera 293. The MIPI interface includes a camera serial interface (camera serial interface, CSI), a display serial interface (display serial interface, DSI), and the like. In some embodiments, the processor 210 communicates with the camera 293 through the CSI, to implement a photographing function of the terminal device. The processor 210 communicates with the display screen 294 through the DSI, to implement a display function of the terminal device.

The GPIO interface may be configured by using software. The GPIO interface may be configured with a control signal, or may be configured with a data signal. In some embodiments, the GPIO interface may be used to connect the processor 210 to the camera 293, the display screen 294, the wireless communications module 260, the audio module 270, the sensor module 280, and the like. The GPIO interface may be further configured as an I2C interface, an I2S interface, a UART interface, a MIPI, or the like.

The USB interface 230 is an interface that conforms to a USB standard specification, and may be specifically a mini-USB interface, a micro-USB interface, a USB Type-C interface, or the like. The USB interface 230 may be used to connect to a charger to charge the terminal device, or may be used to transmit data between the terminal device and a peripheral device, or may be used to connect to a headset for playing audio through the headset. The interface may be further used to connect to another terminal device, for example, an AR device.

It can be understood that an interface connection relationship between the modules that are shown in this embodiment of the present invention is merely an example for description, and does not constitute a limitation on a structure of the terminal device. In some other embodiments of this application, the terminal device may alternatively use an interface connection manner different from that in the foregoing embodiment, or use a combination of a plurality of interface connection manners.

A wireless communications function of the terminal device may be implemented by using the antenna 1, the antenna 2, the mobile communications module 250, the wireless communications module 260, the modem processor, the baseband processor, and the like.

The wireless communications module 260 may provide a wireless communications solution that is applied to the terminal device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 260 may be one or more components integrating at least one communications processor module. The wireless communications module 260 receives an electromagnetic wave through the antenna 2, performs frequency modulation and filtering on an electromagnetic wave signal, and sends a processed signal to the processor 210. The wireless communications module 260 may further receive a signal, that is to be transmitted, from the processor 210, perform frequency modulation and amplification on the signal, and convert the signal into an electromagnetic wave for radiation through the antenna 2.

In some embodiments, the antenna 1 and the mobile communications module 250 in the terminal device are coupled, and the antenna 2 and the wireless communications module 260 in the terminal device are coupled, so that the terminal device can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division-synchronous multiple access, TD-SCDMA), long term evolution (long term evolution, LTE), BT, a GNSS, a WLAN, NFC, FM, IR, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device may implement a display function by using the GPU, the display screen 294, the application processor, and the like. The GPU is a microprocessor for image processing, and is connected to the display screen 294 and the application processor. The GPU is configured to: perform mathematical and geometric computation, and render an image. The processor 210 may include one or more GPUs that execute a program instruction to generate or change display information.

The display screen 294 is configured to display an image, a video, or the like. The display screen 294 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a Mini-LED, a Micro-LED, a Micro-OLED, a quantum dot light-emitting diode (quantum dot light-emitting diode, QLED), and the like. In some embodiments, the terminal device may include one or N display screens 294, and N is a positive integer greater than 1.

The external storage interface 220 may be used to connect to an external storage card, for example, a micro SD card, to extend a storage capability of the terminal device. The external storage card communicates with the processor 210 through the external storage interface 220, to implement a data storage function. For example, files such as music and a video are stored in the external storage card.

The internal storage 221 may be configured to store computer-executable program code. The executable program code includes an instruction. The processor 210 runs the instruction stored in the internal storage 221, to perform various function applications and data processing on the terminal device. The internal storage 221 may include a program storage area and a data storage area. The program storage area may store an operating system, an application for at least one function (for example, a sound play function or an image play function), and the like. The data storage area may store data (for example, audio data and an address book) and the like that are created during use of the terminal device. In addition, the internal storage 221 may include a highspeed random access memory, and may further include a non-volatile memory, for example, at least one magnetic disk storage device, a flash storage device, or a universal flash storage (universal flash storage, UFS).

The terminal device may implement an audio function, for example, music play or recording, by using the audio module 270, the loudspeaker 270A, the receiver 270B, the microphone 270C, the headset jack 270D, the application processor, and the like.

The audio module 270 is configured to convert digital audio information into an analog audio signal for output, and is further configured to convert an analog audio input into a digital audio signal. The audio module 270 may be further configured to encode and decode an audio signal. In some embodiments, the audio module 270 may be disposed in the processor 210, or a part of functional modules of the audio module 270 are disposed in the processor 210.

The loudspeaker 270A, also referred to as a "speaker", is configured to convert an electrical audio signal into a sound signal. The terminal device may receive music or receive a hands-free call by using the loudspeaker 270A.

The headset jack 270D is configured to connect to a wired headset. The headset jack 270D may be the USB interface 230, or may be a 3.5 mm open mobile terminal platform (open mobile terminal platform, OMTP) standard interface or a cellular telecommunications industry association of the USA (cellular telecommunications industry association, CTIA of the USA) standard interface.

The pressure sensor 280A is configured to sense a pressure signal, and may convert the pressure signal into an electrical signal. In some embodiments, the pressure sensor 280A may be disposed in the display screen 294. There are a plurality of types of pressure sensors 280A, such as a resistive pressure sensor, an inductive pressure sensor, and a capacitive pressure sensor. The capacitive pressure sensor may include at least two parallel plates made of conductive materials. When a pressure is applied to the pressure sensor 280A, capacitance between electrodes changes. The terminal device determines pressure intensity based on a capacitance change. When a touch operation is performed on the display screen 294, the terminal device detects strength of the touch operation by using the pressure sensor 280A. The terminal device may calculate a touch position based on a detection signal from the pressure sensor 280A. In some embodiments, touch operations that are performed at a same touch position but have different touch operation intensity may correspond to different operation instructions. For example, when a touch operation with touch operation intensity less than a first pressure threshold is performed on an icon Messages, an instruction for viewing an SMS message is executed. When a touch operation with touch operation intensity greater than or equal to the first pressure threshold is performed on the icon Messages, an instruction for creating a new SMS message is executed.

The touch sensor 280K is also referred to as a "touch panel". The touch sensor 280K may be disposed on the display screen 294. The touch sensor 280K and the display screen 294 form a touchscreen, which is also referred to as a "touch screen". The touch sensor 280K is configured to detect a touch operation performed on or near the touch sensor. The touch sensor may transfer a detected touch operation to the application processor to determine a type of the touch event. A visual output related to the touch operation may be provided through the display screen 294. In some other embodiments, the touch sensor 280K may alternatively be disposed on a surface of the terminal device at a position different from that of the display screen 294.

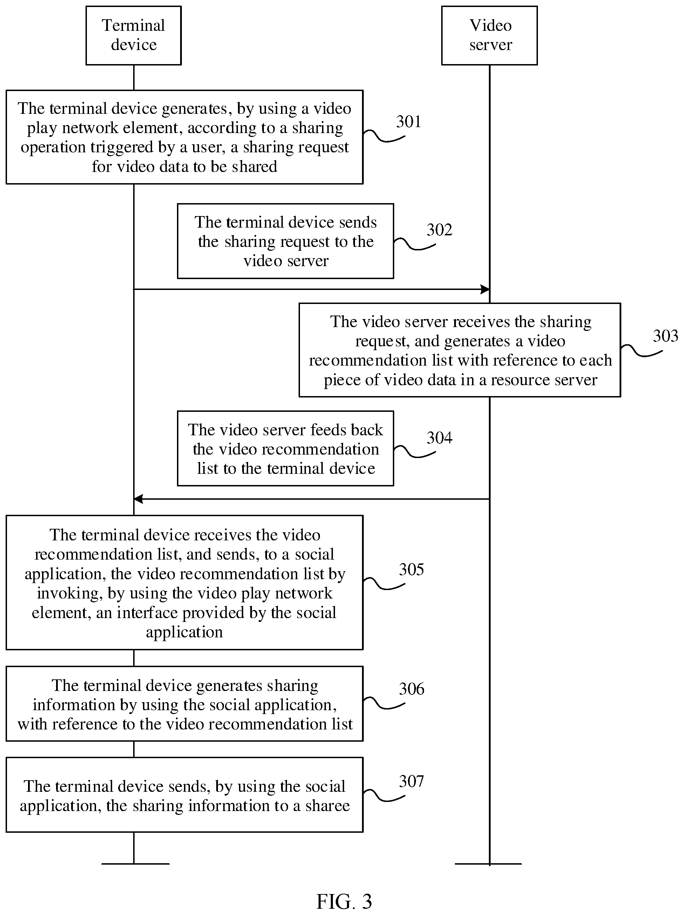

FIG. 3 is a schematic flowchart of a multimedia data sharing method according to an embodiment of this application. As an example rather than a limitation, the method may be applied to the foregoing terminal device and video server. Refer to FIG. 3. The method may include the following steps.

Step 301: A terminal device generates, by using a video play network element, according to a sharing operation triggered by a user, a sharing request for video data to be shared.

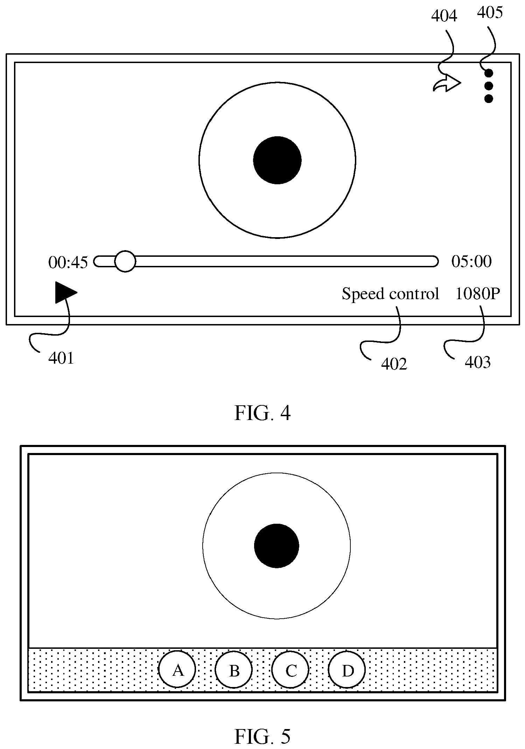

The terminal device may perform data interaction with a video server. The terminal device sends a video data request to the video server, and the video server may feed back video data to the terminal device according to the video data request. The terminal device may play the received video data in a preset play interface by using the video play network element. As shown in FIG. 4, the play interface may include a play/pause option 401, a speed control option 402, a resolution option 403, a sharing option 404, and another option 405.

In a process in which the terminal device plays video data, the user may play the role of a sharer and share, by using a social application, the currently viewed video data with a sharee. The terminal device may detect the sharing operation triggered by the user on the sharing option in the play interface. If the terminal device detects the sharing operation triggered by the user, the currently played video data may be used as the video data to be shared, a video identifier and a timestamp of the video data to be shared may be obtained by using the video play network element, and then the sharing request for the video data to be shared may be generated based on the video identifier and the timestamp of the video data to be shared.

The video identifier is used to uniquely identify the video data to be shared, and the timestamp is used to indicate a play progress of the video data to be shared. For example, if the terminal device detects, when the video data to be shared has been played for 4 minutes and 18 seconds, the sharing operation triggered by the user, the terminal device may use 4 minutes and 18 seconds that indicates a current play progress as the timestamp of the video data to be shared.

In addition, the sharing request may further include sharer information, and the sharer information may include at least one of location information, time point information, and information about the video play network element. The location information is used to indicate a current geographic location of the sharer. The time point information is used to indicate a time point at which the sharing operation is triggered. The information about the video play network element is used to indicate that the video play network element is an application installed on the terminal device or a web application started by the terminal device.

Correspondingly, after detecting the sharing operation triggered by the user, the terminal device may add the sharer information to the sharing request when generating the sharing request based on the video identifier and the timestamp of the video data to be shared.

In addition, the sharing request may further include a sharing path. The sharing path is used to indicate the social application used on the terminal device to send the sharing request to the sharee. Correspondingly, when the terminal device detects the sharing operation triggered by the user, the play interface may display a pop-up window for sharing to the user. The pop-up window for sharing may include a plurality of options, and each option corresponds to one social application. If it is detected that the user triggers a selection operation on a specific option, the terminal device may determine the sharing path, so that in a subsequent step, an interface provided by the social application may be invoked, based on the social application indicated by the sharing path, for sharing. Correspondingly, when generating the sharing request, the terminal device may further add the sharing path, so that in a subsequent step, more accurate recommendation for sharing may be provided based on the sharing path for the sharee.

For example, as shown in FIG. 5, the video data to be shared that is played by the video play network element may be shared with the sharee by using a social application A, a social application B, a social application C, or a social application D. If the terminal device detects that the user triggers the sharing operation on the sharing option in the play interface, the terminal device may display the pop-up window for sharing to the user, to display an interface as shown in FIG. 5. The pop-up window for sharing includes options corresponding to the social application A, the social application B, the social application C, and the social application D respectively. If it is detected that the user triggers a selection operation on an option corresponding to the social application C, the sharing path of the terminal device may be determined, and the sharing request is generated based on the video identifier and the timestamp of the video data to be shared, with reference to the sharer information and the sharing path.

It should be noted that, in actual application, the terminal device may not only share the currently played video data, but may also share video data that is favorited by the sharer in the video play network element, video data recommended by the video play network element, video data in play history of the video play network element, and other video data. This is not limited in this embodiment of this application.

Step 302: The terminal device sends the sharing request to the video server.

After generating the sharing request, the terminal device may send the sharing request to the video server, so that in a subsequent step, the video server may determine, according to the sharing request, a plurality of pieces of associated video data associated with the video data to be shared and associated video information corresponding to each piece of the associated video data.

Step 303: The video server receives the sharing request, and generates the video recommendation list with reference to each piece of video data in a resource server.

The video server may first receive the sharing request sent by the terminal device, determine, in each piece of the video data in the resource server, by using the video sharing service network element, a plurality of pieces of associated video information that each match each piece of information in the sharing request, and then obtain the associated video data corresponding to each piece of the associated video information, to generate the video recommendation list based on each piece of the associated video information and each piece of the associated video data. In addition, before determining the plurality of pieces of associated video data, the video server may first obtain video data to be associated in a plurality of manners, to select the associated video data from a plurality of pieces of video data to be associated.

Specifically, the video server may search, by using the video sharing service network element, with reference to the video identifier in the sharing request, in the resource server for information about the video data to be shared, for example, a video type, a video label, a length type, and other information, to obtain video information of the video data to be shared (herein referred to as information about a video to be shared). Then, the video sharing service network element may search, based on the information about the video to be shared of the video data to be shared, in the resource server for information that matches at least one of the video type, the video label, the length type, and the other information that are in the information about the video to be shared, and use the information as information about a video to be associated. Then, the video server may determine, by using the video sharing service network element, based on the information about the video to be associated, the video data to be associated.

The information about the video to be shared may include information about the video data to be shared, for example, a name, descriptive information, and a URL. The descriptive information may include at least one of a main actor or actress, the video type, and the video label. Clearly, the descriptive information may further include other information, for example, the length type. This is not limited in this embodiment of this application.

In addition, if the length type indicates that the video data to be shared is a long video, the video server may further determine, in the resource server by using the video sharing service network element, with reference to the timestamp in the sharing request, a current highlight including a time point indicated by the timestamp and/or a plurality of recommended highlights including time points that are close to the time point indicated by the timestamp, to further use the current highlight and/or the plurality of recommended highlights as the video data to be associated.

Further, if the sharing request further includes the sharer information, the video server may further search, by using the video sharing service network element, with reference to the location information, the time point information, and/or the information about the video play network element in the sharer information, in the resource server for the video data to be associated.

Specifically, the video sharing service network element may determine a current geographic location of the sharer based on the location information, and determine, based on the geographic location, another user viewing video data within a preset range, to determine the video data viewed by the another user; and then select and obtain the video data to be associated from the video data viewed by the another user. That is, the video data to be associated may be selected from the video data played by the video play network element within the preset range. The video sharing service network element may further determine a current time point based on the time point information, determine video data played by the video play network element within a current period of time, and then select the video data to be associated from the video data played within the current period of time. The video sharing service network element may further determine, based on the information about the video play network element, the video play network element that plays the video data to be shared, and then select the video data to be associated from video data viewed by another user using the video play network element. That is, the video data to be associated may be selected from the video data played by the video play network element.

It should be noted that, in actual application, the video sharing service network element may further determine, based on big data analysis, other video data that is further viewed by a user viewing the video data to be shared, so that the other video data may further be used as the video data to be associated.

Clearly, the video sharing service network element may further determine the video data to be associated in another manner other than the foregoing manners. This is not limited in this embodiment of this application.

After determining, by using the video sharing service network element, a large amount of video data to be associated, the video server may determine, based on the sharing path in the sharing request, the social application used to send the video data to be shared to the sharee, and determine a user preference for the social application based on big data obtained through statistics. The user preference may include at least one of the video type, the length type, and the information about the video play network element. Clearly, the user preference may further include other information. This is not limited in this embodiment of this application.

Then, the video sharing service network element may calculate, based on the user preference, with reference to preset weights corresponding to a video type, a video label, a length type, and other information of each piece of the video data to be associated, a degree of association between each piece of the video data to be associated and the video data to be shared, to obtain the degree of association corresponding to each piece of the video data to be associated. The video sharing service network element may further sort, based on the degree of association corresponding to each piece of the video data to be associated, each piece of the video data to be associated in descending order, to obtain the sorted video data to be associated.

Finally, the video sharing service network element may select, based on a preset quantity for selection, video data to be associated that is placed at the front to be the associated video data. The video sharing service network element may further generate the video recommendation list based on the information about the video to be shared and video information of each piece of the associated video data (herein referred to as associated video information), so that in a subsequent step, the terminal device may share, based on the video recommendation list, a video with the sharee.

The associated video information may include information about the associated video data, for example, a name, descriptive information, and a URL.

For example, the video server may receive a sharing request Q for video data S 1 to be shared, search in the resource server by using the video sharing service network element, based on a video identifier X in the sharing request Q, information about a video to be shared of the video data S 1 to be shared, for example, a video type A1, a video label B 1, a length type C1, and other information D1 of the video data S1 to be shared, and then search in the resource server, based on the information about the video to be shared, for information, for example, a video type A2, a video label B2, a length type C2, and other information D2, to determine corresponding video data S2 to be associated. Similarly, the video server may further search in the resource server for information, for example, a video type A3, a video label B3, a length type C3, and other information D3 based on the information, for example, the video type A1, the video label B 1, the length type C1, and the other information D1, to determine corresponding video data S3 to be associated. In addition, the video server may further search in the resource server for other information D4 in which a main actor or actress is the same as that in the other information D 1, to determine video data X to be associated corresponding to the other information D4. The video data S 1 to be shared, the video data S2 to be associated, and the video data S3 to be associated belong to a same series of video data.

In addition, the video sharing service network element may further determine, based on a timestamp T in the sharing request Q, with reference to a time period corresponding to each highlight clipped from the video data S 1 to be shared, that the time period includes a current highlight P0 at the time point indicated by the timestamp T and a plurality of recommended highlights P1, P2, and P3 each within a time period that is close to the time point indicated by the timestamp T. In this case, the video sharing service network element may use the current highlight P0, the recommended highlight P1, the recommended highlight P2, and the recommended highlight P3 as the video data to be associated.

In addition, the video sharing service network element may further use a geographic location indicated by location information E in the sharer information as a center of a circle, and obtain a preset circular range with reference to a preset radius R. The video sharing service network element may determine, based on the big data obtained through statistics, another user viewing video data by using the video play network element within the preset circular range, so that the video data viewed by the another user may be determined, and video data Y to be associated may be selected from the video data viewed by the another user.

Similarly, the video sharing service network element may further obtain a preset time period based on a time point indicated by time point information F in the sharer information, with reference to a preset time change range Δt. The video sharing service network element may determine, based on the big data obtained through statistics, video data viewed by another user within the preset time period, and select and obtain video data Z to be associated.

Clearly, the video sharing service network element may further determine, based on information G about the video play network element in the sharer information, the video play network element used by the sharer. The video sharing service network element may further determine, based on the big data obtained through statistics, video data viewed by another user viewing the video data by using the video play network element, to select and obtain video data U to be associated from the video data.

Then, the video sharing service network element may determine the user preference for the social application based on the social application indicated by the sharing path, and obtain, through calculation, a degree of association between each piece of the video data to be associated and the video data S1 to be shared.

If a length type preferred by a user using the social application is a short video, after each piece of the video data to be associated is sorted based on the degree of association, a sequence of the obtained video data to be associated is P0, P1, P2, S2, S3, X, Y, Z and U. If the preset quantity for selection is 4, the video data P0, P1, P2, and S2 to be associated may be used as the associated video data, and corresponding associated video information is obtained. Further, the video sharing service network element may generate a video recommendation list in a format of JS object notation (JavaScrip Object Notation, JSON) based on the information about the video to be shared and each piece of the associated video information. The video recommendation list is shown as follows:

```
          {
               "sharelist":[
                    {"videoname": "[S1]full video source",
"description": "starring H, car racing,
 action movie, first of the series", "playurl": "http://www. S1"},
                    {"videoname": "[S1]current highlight",
"description": "starring H, car racing,
 action movie, first of the series", "playurl": "http://www.S1/P0"},
                    {"videoname": "[S1]highlight 1", "description": "starring H, car racing,
 action movie, first of the series", "playurl": "http://www.S1/P1"},
                    {"videoname": "[S1]highlight 2", "description": "starring H, car racing,
 action movie, first of the series", "playurl": "http://www.S1/P2"},
                    {"videoname": "[S2]full video source",
"description": "starring H, car racing,
 action movie, second of the series", "playurl": "http://www.S2"}
               ]
          }
```

"sharelist" represents the video recommendation list, "videoname" represents a name of video data, "description" represents descriptive information, and "playurl" represents a URL.

If a length type preferred by a user using the social application is a long video, after each piece of the video data to be associated is sorted based on the degree of association, a sequence of the obtained video data to be associated is S2, S3, X, P0, P1, P2, Y, Z and U. If the preset quantity for selection is 4, the video data S2, S3, X, and P0 to be associated may be used as the associated video data, and corresponding associated video information is obtained. Further, the video sharing service network element may generate a video recommendation list in a format of JSON based on the information about the video to be shared and each piece of the associated video information. The video recommendation list is shown as follows:

```
          {
               "sharelist":[
                    {"videoname": "[S1]full video source",
"description": "starring H, car racing,
 action movie, first of the series", "playurl": "http://www. S1"},
                    {"videoname": "[S2]full video source",
"description": "starring H, car racing,
 action movie, second of the series", "playurl": "http://www.S2"},
                    {"videoname": "[S3]full video source",
"description": "starring H, car racing,
 action movie, third of the series", "playurl": "http://www.S3"},
                    {"videoname": "[X]full video source", "description": "starring H, science
                    fiction, action movie", "playurl": "http://www.X"},
                    {"videoname": "[S1]current highlight",
"description": "starring H, car racing,
 action movie, first of the series", "playurl": "http://www.S1/P0"},
                ]
          }
```

It should be noted that, in actual application, the video play network element may set, according to an operation triggered by a user on the terminal device, the quantity of pieces of associated video data to be selected. Correspondingly, the terminal device may add the quantity for selection that is set by the user to the information about the video to be shared, and the video sharing service network element of the video server may select the associated video data based on the quantity for selection. If the user does not specify the quantity for selection for the video play network element, the terminal device may add a default quantity for selection to the information about the video to be shared, or the terminal device may not add the quantity for selection to the information about the video to be shared. If reading no data on the quantity for selection, the video sharing service network element of the video server may select the associated video data based on the default quantity for selection. Clearly, the video sharing service network element may alternatively determine the quantity for selection in another manner, for example, obtain the quantity for selection based on big data analysis or based on historical data on sharing the video data to be shared. This is not limited in this embodiment of this application.

In addition, when generating the video recommendation list, the video server may set the video data to be shared at the top of the video recommendation list. Clearly, a place of the video data to be shared in the video recommendation list may further be adjusted based on the user preference for the social application. This is not limited in this embodiment of this application.

Step 304: The video server feeds back the video recommendation list to the terminal device.

After generating the video recommendation list, the video server may send the video recommendation list to the terminal device, so that the terminal device may generate, based on the video recommendation list, the sharing information to be sent to the sharee, to share the video data to be shared and the associated video data with the sharee. For example, the information about the shared video sent by the terminal device to the video server may include a terminal identifier used to indicate the terminal device, and the video server may feed back the video recommendation list to the terminal device based on the terminal identifier.

Step 305: The terminal device receives the video recommendation list, and sends, to the social application, the video recommendation list by invoking, by using the video play network element, an interface provided by the social application.

After sending the information about the video to be shared to the video server, the terminal device may wait for the video recommendation list fed back by the video server. If the terminal device receives the video recommendation list sent by the video server, the terminal device may invoke, by using the video play network element, the interface provided by the social application indicated by the sharing path, to forward the video recommendation list to the social application.

Step 306: The terminal device generates the sharing information by using the social application, with reference to the video recommendation list.

The social application on the terminal device may receive the video recommendation list, and generate the sharing information based on the video recommendation list, so that in a subsequent step, the terminal device may send, by using the social application, the sharing information to the sharee, so that the sharee can view the video data to be shared and the associated video data based on the sharing information.

In an optional embodiment, before generating the sharing information, the social application on the terminal device may display a multimedia information selection list to a user in a candidate interface provided by the social application. The multimedia information selection list may include the information about the video to be shared and each piece of the associated video information in the video recommendation list, and the multimedia information selection list may further include selection options corresponding to the information about the video to be shared and each piece of the associated video information. If a selection option is in a selected state, the social application may generate the sharing information based on information about a video to be shared or associated video information that correspond to the selection option.

Correspondingly, the terminal device may detect a selection operation triggered by the user on each selection option in the candidate interface. If the terminal device detects that the user triggers a selection operation on a specific selection option, the social application may set the selection option to the selected state. If the terminal device detects that the user triggers a selection operation on an option for confirmation in the candidate interface, the social application may obtain, based on a current status of each selection option, information about a video to be shared and/or associated video information corresponding to a selection option in the selected state, and generate the sharing information, in a preset format, based on the obtained information about the video to be shared and/or associated video information.

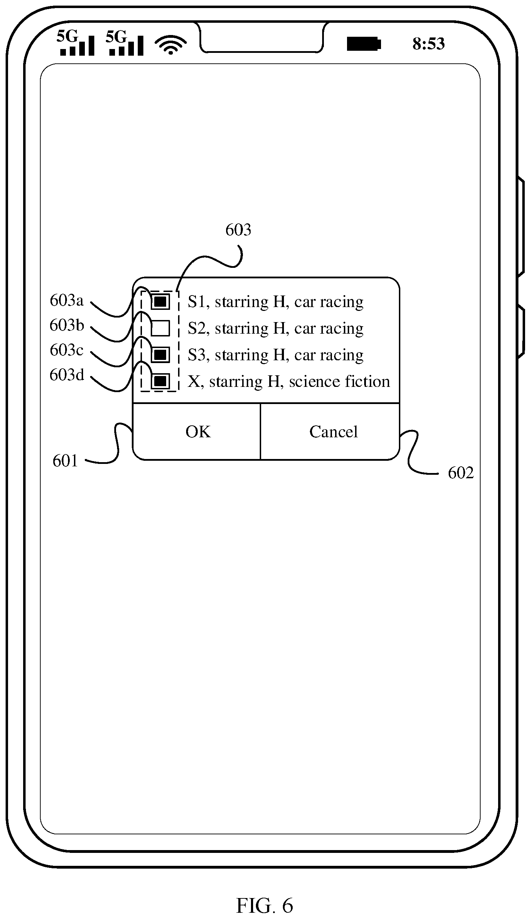

For example, as shown in FIG. 6, after the terminal device selects the sharing path in the pop-up window for sharing as shown in FIG. 5, the terminal device may jump to a candidate interface provided by the application as shown in FIG. 6. As shown in FIG. 6, the candidate interface may include an option 601 for confirmation, an option 602 for cancellation, and a plurality of selection options 603. The plurality of selection options 603 may include a first selection option 603a, a second selection option 603b, a third selection option 603c, and a fourth selection option 603d. If the terminal device detects that the user triggers selection operations on the first selection option 603 a, the third selection option 603 c, and the fourth selection option 603d, the social application may generate the sharing information based on information about a video to be shared or associated video information that correspond to the first selection option 603a, the third selection option 603c, and the fourth selection option 603d.

It should be noted that, in actual application, when displaying the candidate interface, the social application may set each selection option to the selected state by default, so that the sharer can share each piece of video data in the video recommendation list with the sharee. In addition, the social application may alternatively, by presetting, generate the sharing information, and not display the candidate interface to a user when receiving the video recommendation list, and the sharing information is generated based on the information about the video to be shared and each piece of the associated video information in the video recommendation list. This is not limited in this embodiment of this application.

Step 307: The terminal device sends, by using the social application, the sharing information to the sharee.

After the social application generates the sharing information, the terminal device may display a pop-up window for confirmation to the sharer by using the social application. The pop-up window for confirmation may include the sharing information, a sending option, and an option for cancellation. If the terminal device detects a selection operation triggered by a user on the sending option, the social application may send the sharing information to the sharee, so that the sharee can view video data based on the information about the video to be shared and/or each piece of the associated video information in the sharing information.

In addition, before the pop-up window for confirmation is displayed to the sharer, the social application may display a user selection interface to the user. The user selection interface may include user identifiers of a plurality of sharees. The social application may determine, based on a user identifier selected by the user, to send the sharing information to a sharee that is indicated by the user identifier.

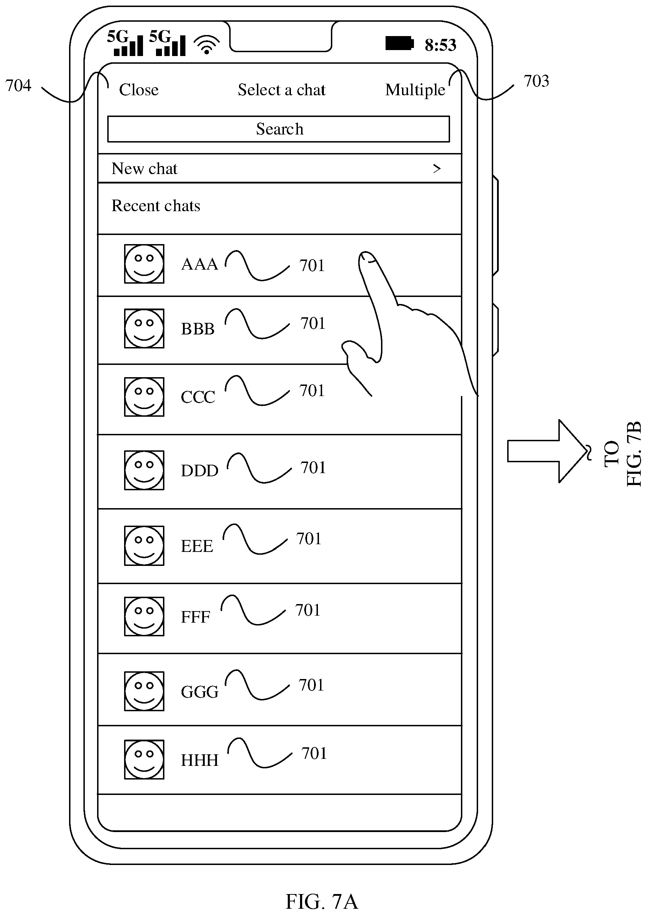

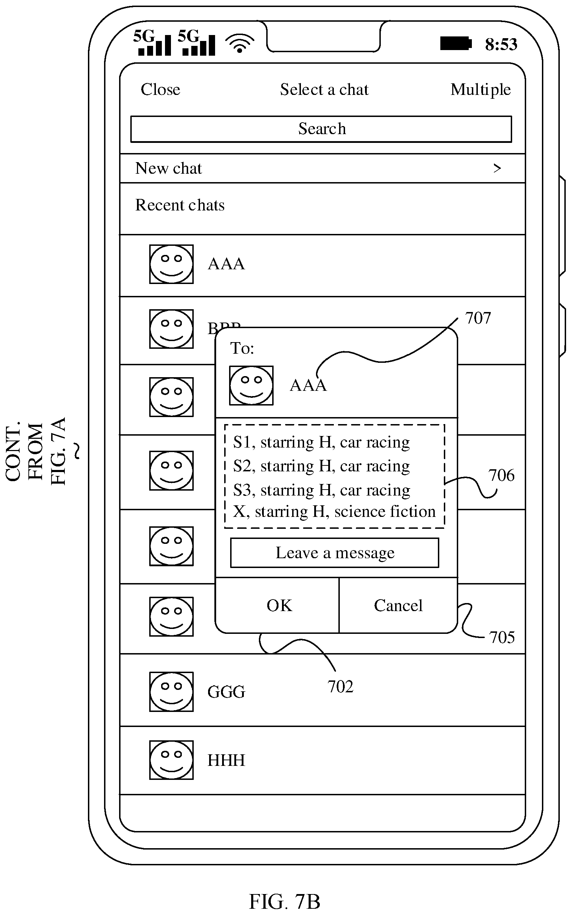

For example, refer to FIG. 7A and FIG. 7B. FIG. 7A and FIG. 7B show the user selection interface and the pop-up window for confirmation that are displayed in the social application. The terminal device may first display the user selection interface to the sharer, and detect a selection operation triggered by the sharer on a user identifier 701 in the user selection interface. If it is detected that the sharer triggers the selection operation on any user identifier 701 (a user identifier AAA is used as an example herein), the social application may obtain corresponding user information (that is, AAA) based on the user identifier 701 selected by the sharer, add the user information to the sharing information, generate the pop-up window for confirmation, and display the pop-up window for confirmation to the user. If the terminal device detects that the sharer triggers a selection operation on a sending option 702 in the pop-up window for confirmation, the social application may send the sharing information to a sharee that is indicated by the user information.

However, if the terminal device detects, when displaying the user selection interface, a selection operation triggered by the sharer on an option 703 for multi-selection, the terminal device may send, based on an operation later triggered by the sharer, the sharing information to a plurality of sharees. If the terminal device detects, when displaying the user selection interface, a selection operation triggered by the sharer on an option 704 for closing, the terminal device may stop sending the sharing information to the sharee.

Further, as shown in FIG. 7A and FIG. 7B, the pop-up window for confirmation may further include an option 705 for cancellation, sharing information 706, and user information 707. After the terminal device generates and displays, with reference to the user information, the pop-up window for confirmation, the sharer may view the sharing information 706 and the user information 707. If the sharing information and/or the user information do/does not meet the expectation of the sharer, the sharer may trigger a selection operation on the option 705 for cancellation, and the terminal device no longer displays the pop-up window for confirmation, but jumps to the user selection interface, so that the sharer reselects the sharee.

In conclusion, according to the multimedia data sharing method provided in embodiments of this application, the terminal device obtains and sends, to the video server, the video information to be shared of the video data to be shared. The video server may generate and feed back, to the terminal device, the video recommendation list based on the video information to be shared, with reference to each piece of the video data in the resource server. The terminal device may send the video recommendation list to the social application by using the video play network element, and then generate and send, to the sharee, the sharing information by using the social application, with reference to the video recommendation list. In this way, the sharee may view each piece of the video data in the video recommendation list based on the sharing information. That is, the sharee can conveniently and quickly view associated video data by using the social application, and diversity and flexibility of viewing the video data by the sharee can be improved.

In addition, if the video data to be shared is a long video, the sharee may quickly view, by viewing short video data in the video data to be shared, a highlight in the video data to be shared. If the video data to be shared is a short video, the sharee may view, by viewing long video data in the video data to be shared, full video data of the video data to be shared.

In addition, video data viewed by another user is obtained through statistics, so that a viewing preference of the another user can be discovered, thereby improving accuracy of recommending video data to a sharee.

It should be understood that sequence numbers of the steps in the foregoing embodiments do not mean a sequence for performing. The sequence for performing the processes should be determined based on functions and internal logic of the processes, and should not constitute any limitation on implementation processes of embodiments of this application.

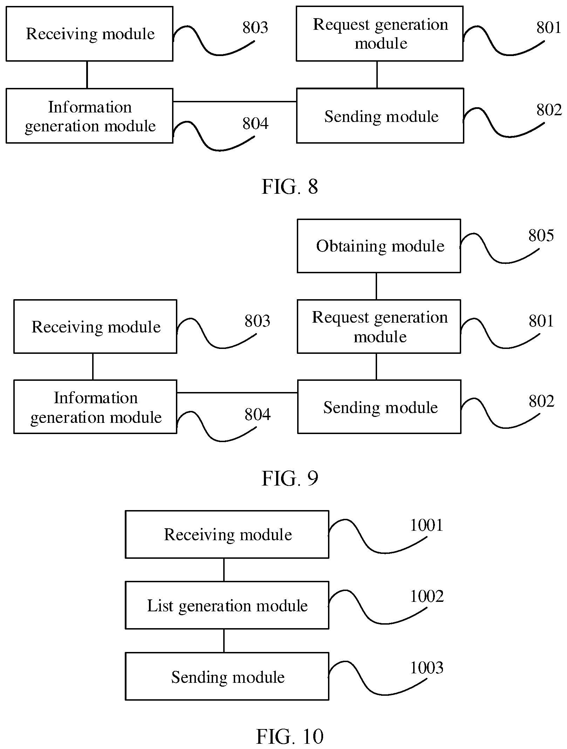

Corresponding to the multimedia data sharing method described in the foregoing embodiments, FIG. 8 is a block diagram of a structure of a multimedia data sharing apparatus according to an embodiment of this application. For ease of description, only parts related to embodiments of this application are shown.

As shown in FIG. 8, the apparatus includes:
a request generation module 801, configured to generate, by using a multimedia play network element, a sharing request corresponding to multimedia data to be shared;
a sending module 802, configured to send the sharing request to a multimedia server;
a receiving module 803, configured to receive a multimedia recommendation list that is associated with the multimedia data to be shared and that is sent by the multimedia server; and
an information generation module 804, configured to generate sharing information based on the multimedia recommendation list by using a social application.

The sending module 802 is further configured to send, by using the social application, the sharing information to a sharee.

Optionally, the multimedia recommendation list includes multimedia information to be shared and a plurality of pieces of associated multimedia information, the multimedia information to be shared is multimedia information corresponding to the multimedia data to be shared, and the associated multimedia information is multimedia information associated with the multimedia information to be shared.

The information generation module 804 is further configured to: generate a multimedia information selection list based on the multimedia information to be shared and each piece of the associated multimedia information; and in response to a selection operation of a sharer in the multimedia information selection list, generate the sharing information based on multimedia information selected by the sharer.

Optionally, as shown in FIG. 9, the apparatus further includes:
an obtaining module 805, configured to: in response to a sharing operation triggered by the sharer for the multimedia data to be shared, obtain, by using the multimedia play network element, a multimedia identifier of the multimedia data to be shared, where the multimedia identifier is used to indicate the multimedia data to be shared.

The request generation module 801 is further configured to generate the sharing request based on the multimedia identifier by using the multimedia play network element.

Optionally, the sharing request includes sharer information and/or a sharing path. The sharer information includes a location of the sharer, a time point of sharing, and/or information about the multimedia play network element. The sharing path is used to indicate the social application that sends the sharing information. The information about the multimedia play network element is used to indicate the multimedia play network element.

If the multimedia data to be shared is video data, the sharing request further includes a timestamp. The timestamp is used to indicate a play progress of the video data.

Optionally, the sending module 802 is further configured to: display, to the sharer, a sharing interface generated based on the sharing information, where the sharing interface includes a sending option; and in response to a selection operation triggered by the sharer on the sending option, send, by using the social application, the sharing information to the sharee.

FIG. 10 is a block diagram of a structure of still another multimedia data sharing apparatus according to an embodiment of this application. For ease of description, only a part related to this embodiment of this application is shown.

As shown in FIG. 10, the apparatus includes:
a receiving module 1001, configured to receive a sharing request that is corresponding to multimedia data to be shared and that is sent by a terminal device;
a list generation module 1002, configured to generate, according to the sharing request, based on a plurality of pieces of pre-stored multimedia data, a multimedia recommendation list associated with the multimedia data to be shared; and
a sending module 1003, configured to send the multimedia recommendation list to the terminal device.

Optionally, the list generation module 1002 is further configured to: obtain, from the plurality of pieces of multimedia data according to the sharing request, a plurality of pieces of multimedia data to be associated that is associated with the multimedia data to be shared; select a preset quantity of pieces of multimedia data to be associated as associated multimedia data; and generate the multimedia recommendation list based on multimedia information corresponding to the multimedia data to be shared and multimedia information corresponding to each piece of the associated multimedia data.

Optionally, the sharing request includes a multimedia identifier, and the multimedia identifier is used to indicate the multimedia data to be shared.

The list generation module 1002 is further configured to: obtain, based on the multimedia identifier, the multimedia information corresponding to the multimedia data to be shared; and search, in the plurality of pieces of multimedia data as the multimedia data to be associated, for a plurality of pieces of multimedia data that matches the multimedia information corresponding to the multimedia data to be shared.

Optionally, the sharing request includes sharer information. The sharer information includes a location of a sharer, a time point of sharing, and/or information about a multimedia play network element, and the information about the multimedia play network element is used to indicate the multimedia play network element.

The list generation module 1002 is further configured to perform at least one of the following:
select, based on a geographic location indicated by the location of the sharer, the multimedia data to be associated from multimedia data played by the multimedia play network element within a preset range;
select, based on the time point of sharing, the multimedia data to be associated from multimedia data played by the multimedia play network element within a preset time period; and
select, based on the multimedia play network element indicated by the information about the multimedia play network element, the multimedia data to be associated from multimedia data played by the multimedia play network element.

Optionally, the sharing request includes a sharing path, and the sharing path is used to indicate a social application that generates sharing information based on the multimedia recommendation list.

The list generation module 1002 is further configured to: determine the social application indicated by the sharing path; determine a user preference corresponding to the social application, where the user preference is used to indicate degrees of preferences of a user for different multimedia data; and select, based on the user preference, a preset quantity of pieces of multimedia data to be associated from the plurality of pieces of multimedia data to be associated as the associated multimedia data.

Optionally, the list generation module 1002 is further configured to: perform calculation, based on the user preference, with reference to multimedia information corresponding to each piece of the multimedia data to be associated, to obtain a degree of association between each piece of the multimedia data to be associated and the multimedia data to be shared; and select, based on the degree of association corresponding to each piece of the multimedia data to be associated, a preset quantity of pieces of multimedia data to be associated from the plurality of pieces of multimedia data to be associated as the associated multimedia data.

Optionally, the multimedia data to be shared is video data, and the sharing request further includes a timestamp. The timestamp is used to indicate a play progress of the video data.

The associated multimedia data includes a video clip after the timestamp in the video data.

Optionally, the plurality of pieces of multimedia data are pre-stored in a multimedia server, or pre-stored in a resource server connected to the multimedia server.

In conclusion, according to the multimedia data sharing apparatus provided in embodiments of this application, the terminal device obtains and sends, to the video server, the video information to be shared of the video data to be shared. The video server may generate and feed back, to the terminal device, the video recommendation list based on the video information to be shared, with reference to each piece of the video data in the resource server. The terminal device may send the video recommendation list to the social application by using the video play network element, and then generate and send, to the sharee, the sharing information by using the social application, with reference to the video recommendation list. In this way, the sharee may view each piece of the video data in the video recommendation list based on the sharing information. That is, the sharee can conveniently and quickly view associated video data by using the social application, and diversity and flexibility of viewing the video data by the sharee can be improved.

A person skilled in the art may clearly understand that for the purpose of convenient and brief description, division into the foregoing functional units or modules is merely used as an example for description. In actual application, the foregoing functions can be allocated to different functional units or modules for implementation based on a requirement. In other words, an inner structure of the apparatus is divided into different functional units or modules to implement all or some of the functions described above. The functional units or modules in embodiments may be integrated into one processing unit, each of the units may exist alone physically, or two or more units are integrated into one unit. The integrated unit may be implemented in a form of hardware, or may be implemented in a form of a software functional unit. In addition, a specific name of each of the functional units or modules is merely for ease of distinguishing, but is not intended to limit the protection scope of this application. For a detailed working process of the foregoing units or modules in the foregoing system, refer to a corresponding process in the foregoing method embodiments. Details are not described herein again.

In the foregoing embodiments, the descriptions of each embodiment have respective focuses. For a part of an embodiment that is not described or explained in detail, refer to related descriptions of another embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus and method may be implemented in another manner. For example, the described system embodiment is merely an example. For example, division into the units or modules is merely logical function division and may be other division in actual implementation. For example, a plurality of units or components may be combined or integrated into another system, or some features may be ignored or not performed. In addition, the displayed or discussed mutual coupling or direct coupling or communication connections may be implemented through some interfaces. The indirect coupling or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network units. All or some of the units may be selected based on an actual requirement, to achieve the objectives of the solutions of embodiments.

In addition, the functional units in embodiments of this application may be integrated into one processing unit, each of the units may exist alone physically, or two or more units are integrated into one unit. The integrated unit may be implemented in a form of hardware, or may be implemented in a form of a software functional unit.

When implemented in the form of a software functional unit and sold or used as an independent product, the integrated unit may be stored in a computer-readable storage medium. Based on such an understanding, all or some of the procedures of the method in embodiments of this application may be implemented by a computer program instructing related hardware. The computer program may be stored in a computer-readable storage medium. When the computer program is executed by a processor, the steps in the foregoing method embodiments may be implemented. The computer program includes computer program code. The computer program code may be in a form of source code, object code, an executable file, in an intermediate form, or the like. The computer-readable medium may include at least any entity or apparatus that can carry the computer program code to a multimedia data sharing apparatus, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disc. In some jurisdictions, the computer-readable medium cannot be an electrical carrier signal or a telecommunications signal according to legislation and patent practices.

In conclusion, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A multimedia data sharing method, wherein the method comprises:
generating, by using a multimedia play network element, a sharing request corresponding to multimedia data to be shared;
sending the sharing request to a multimedia server;
receiving a multimedia recommendation list that is associated with the multimedia data to be shared and that is sent by the multimedia server, and generating sharing information based on the multimedia recommendation list by using a social application; and
sending, by using the social application, the sharing information to a sharee.

2. The method according to claim 1, wherein the multimedia recommendation list comprises multimedia information to be shared and a plurality of pieces of associated multimedia information, the multimedia information to be shared is multimedia information corresponding to the multimedia data to be shared, and the associated multimedia information is multimedia information associated with the multimedia information to be shared; and
the generating sharing information based on the multimedia recommendation list by using a social application comprises:
generating a multimedia information selection list based on the multimedia information to be shared and each piece of the associated multimedia information; and
in response to a selection operation of a sharer in the multimedia information selection list, generating the sharing information based on multimedia information selected by the sharer.

3. The method according to claim 1 or 2, wherein before the generating, by using a multimedia play network element, a sharing request corresponding to multimedia data to be shared, the method further comprises:
in response to a sharing operation triggered by the sharer for the multimedia data to be shared, obtaining, by using the multimedia play network element, a multimedia identifier of the multimedia data to be shared, wherein the multimedia identifier is used to indicate the multimedia data to be shared; and
the generating, by using a multimedia play network element, a sharing request corresponding to multimedia data to be shared comprises:
generating the sharing request based on the multimedia identifier by using the multimedia play network element.

4. The method according to claim 3, wherein the sharing request comprises sharer information and/or a sharing path, the sharer information comprises a location of the sharer, a time point of sharing, and/or information about the multimedia play network element, the sharing path is used to indicate the social application that sends the sharing information, and the information about the multimedia play network element is used to indicate the multimedia play network element; and
if the multimedia data to be shared is video data, the sharing request further comprises a timestamp, wherein the timestamp is used to indicate a play progress of the video data.

5. The method according to any one of claims 1 to 4, wherein the sending, by using the social application, the sharing information to a sharee comprises:
displaying, to the sharer, a sharing interface generated based on the sharing information, wherein the sharing interface comprises a sending option; and
in response to a selection operation triggered by the sharer on the sending option, sending, by using the social application, the sharing information to the sharee.

6. A multimedia data sharing method, wherein the method comprises:
receiving a sharing request that is corresponding to multimedia data to be shared and that is sent by a terminal device;
generating, according to the sharing request, based on a plurality of pieces of pre-stored multimedia data, a multimedia recommendation list associated with the multimedia data to be shared; and
sending the multimedia recommendation list to the terminal device.

7. The method according to claim 6, wherein the generating, according to the sharing request, based on a plurality of pieces of pre-stored multimedia data, a multimedia recommendation list associated with the multimedia data to be shared comprises:
obtaining, from the plurality of pieces of multimedia data according to the sharing request, a plurality of pieces of multimedia data to be associated that is associated with the multimedia data to be shared;
selecting a preset quantity of pieces of multimedia data to be associated as associated multimedia data; and
generating the multimedia recommendation list based on multimedia information corresponding to the multimedia data to be shared and multimedia information corresponding to each piece of the associated multimedia data.

8. The method according to claim 7, wherein the sharing request comprises a multimedia identifier, and the multimedia identifier is used to indicate the multimedia data to be shared; and
the obtaining, from the plurality of pieces of multimedia data according to the sharing request, a plurality of pieces of multimedia data to be associated that is associated with the multimedia data to be shared comprises:
obtaining, based on the multimedia identifier, the multimedia information corresponding to the multimedia data to be shared; and
searching, in the plurality of pieces of multimedia data as the multimedia data to be associated, for a plurality of pieces of multimedia data that matches the multimedia information corresponding to the multimedia data to be shared.

9. The method according to claim 7, wherein the sharing request comprises sharer information, the sharer information comprises a location of a sharer, a time point of sharing, and/or information about a multimedia play network element, and the information about the multimedia play network element is used to indicate the multimedia play network element; and
the obtaining, from the plurality of pieces of multimedia data according to the sharing request, a plurality of pieces of multimedia data to be associated that is associated with the multimedia data to be shared comprises at least one of the following:
selecting, based on a geographic location indicated by the location of the sharer, the multimedia data to be associated from multimedia data played by the multimedia play network element within a preset range;
selecting, based on the time point of sharing, the multimedia data to be associated from multimedia data played by the multimedia play network element within a preset time period; and
selecting, based on the multimedia play network element indicated by the information about the multimedia play network element, the multimedia data to be associated from multimedia data played by the multimedia play network element.

10. The method according to claim 7, wherein the sharing request comprises a sharing path, and the sharing path is used to indicate a social application that generates sharing information based on the multimedia recommendation list; and
the selecting a preset quantity of pieces of multimedia data to be associated as associated multimedia data comprises:
determining the social application indicated by the sharing path;
determining a user preference corresponding to the social application, wherein the user preference is used to indicate degrees of preferences of a user for different multimedia data; and
selecting, based on the user preference, a preset quantity of pieces of multimedia data to be associated from the plurality of pieces of multimedia data to be associated as the associated multimedia data.

11. The method according to claim 10, wherein the selecting, based on the user preference, a preset quantity of pieces of multimedia data to be associated from the plurality of pieces of multimedia data to be associated as the associated multimedia data comprises:
performing calculation, based on the user preference, with reference to multimedia information corresponding to each piece of the multimedia data to be associated, to obtain a degree of association between each piece of the multimedia data to be associated and the multimedia data to be shared; and
selecting, based on the degree of association corresponding to each piece of the multimedia data to be associated, a preset quantity of pieces of multimedia data to be associated from the plurality of pieces of multimedia data to be associated as the associated multimedia data.

12. The method according to any one of claims 6 to 11, wherein the multimedia data to be shared is video data, the sharing request comprises a timestamp, and the timestamp is used to indicate a play progress of the video data; and
the associated multimedia data comprises a video clip after the timestamp in the video data.

13. The method according to any one of claims 6 to 12, wherein the plurality of pieces of multimedia data are pre-stored in a multimedia server, or pre-stored in a resource server connected to the multimedia server.

14. A multimedia data sharing apparatus, wherein the apparatus comprises:
a request generation module, configured to generate, by using a multimedia play network element, a sharing request corresponding to multimedia data to be shared;
a sending module, configured to send the sharing request to a multimedia server;
a receiving module, configured to receive a multimedia recommendation list that is associated with the multimedia data to be shared and that is sent by the multimedia server; and
an information generation module, configured to generate sharing information based on the multimedia recommendation list by using a social application, wherein
the sending module is further configured to send, by using the social application, the sharing information to a sharee.

15. A multimedia data sharing apparatus, wherein the apparatus comprises:
a receiving module, configured to receive a sharing request that is corresponding to multimedia data to be shared and that is sent by a terminal device;
a list generation module, configured to generate, according to the sharing request, based on a plurality of pieces of pre-stored multimedia data, a multimedia recommendation list associated with the multimedia data to be shared; and
a sending module, configured to send the multimedia recommendation list to the terminal device.

16. An electronic device, comprising a processor, wherein the processor is configured to run a computer program stored in a memory, to implement the method according to any one of claims 1 to 13.

17. A computer-readable storage medium, wherein the computer-readable storage medium stores a computer program, and when the computer program is executed by a processor, the method according to any one of claims 1 to 13 is implemented.
